# EUROPEAN PATENT SPECIFICATION

(11) **EP 1 282 286 B1**
(45) Date of publication and mention of the grant of the patent: **21.09.2005**
(21) Application number: 02255220.2
(22) Date of filing: 26.07.2002
(51) Int. Cl.: H04L 29/06, H04L 12/22, H04L 12/56

(54) **Method of establishing a secure data connection**
Verfahren zur Herstellung eine sichere Datenverbindung
Procédé pour établir une connection de données securisées

(30) Priority: 31.07.2001 GB 0118674
(43) Date of publication of application: 05.02.2003
(73) Proprietor: Hewlett-Packard Company, Palo Alto, CA 94304 (US)
(72) Inventor: Wray, Michael John, Bath BA1 3NE (GB)
(74) Representative: Lawrence, Richard Anthony

(56) References cited:
- US-B1- 6 223 287
- TOUCH J: "Dynamic Internet overlay deployment and management using the X-Bone" PROCEEDINGS 2000 INTERNATIONAL CONFERENCE ON NETWORK PROTOCOLS, PROCEEDINGS OF ICNP 2000. 8TH IEEE CONFERENCE ON NETWORK PROTOCOLS, OSAKA, JAPAN, 14-17 NOV. 2000, pages 59-68, XP002242707 2000, Los Alamitos, CA, USA, IEEE Comput. Soc, USA ISBN: 0-7695-0921-5

## Description

This invention relates to a method of establishing a data connection between computing devices over a computer network.

The recent increase in use of publicly accessible computer networks, such as the Internet, has resulted in an increased need for secure data connections across such networks. This is particularly evident given that there has recently been a large increase in E-commerce facilities on the Internet. Such facilities generally enable confidential business information, financial information, and even payment requests to be sent over publicly accessible computer networks.

The SSL protocol (sometimes called the Transport Level Security (TLS) protocol) is an industry standard method by which secure data connections can be established. The SSL protocol provides data encryption, server authentication, message integrity and optional client authentication over computer networks. SSL is a so-called transport layer protocol since it is defined to operate on the 'sockets' level of a computer network. It will be understood by those skilled in the art that 'sockets' is the standard application program interface (API) by which data is transferred on the transport level of a computer network. As a result of SSL operating on the sockets level of a network, there must be an end-to-end direct connection between networked devices in order for SSL to function correctly.

It is common for so-called 'relay' devices to be located on a computer network. In their simplest form, relays simply receive data from one computer, copy the data, and then forward the data to some destination computer. A 'firewall' is one example of a relay, this type of relay also acting as a security device for controlling access to and from computers within a defined network (e.g. the network of a private company).

It has been proposed to use the SSL protocol when sending a message to a so-called 'secure relay'. A relay is 'secure' if it requires access requests (i.e. a message requesting access to a computing device via the relay) to be made over a secure data link. This proposal assumes that the number of secure relays in the path between the source computer and the destination computer is known, before any connection is established, so that an appropriate number of SSL sessions can be set-up. In situations where the destination computer is referenced by its address, e.g. its Uniform Resource Location (URL) address, there is no information concerning the number of relays (some of which may be secure relays) which have to be traversed in order to reach the destination.

The document "Dynamic Internet Overlay Deployment and Management Using the X-bone" PROCEEDINGS 2000 INTERNATIONAL CONFERENCE ON NETWORK PROTOCOLS PROCEEDINGS ON ICNP 2000. 8^{th} IEEE CONFERENCE ON NETWORK PROTOCOLS, OSAKA JAPAN 14-17 NOV 2000 pages 59-68, describes tha X-Bone a system for the dynamic and management of Internet overlay networks in which an overlay manager uses TCP/SSL to configure and monitor resources.

According to a first aspect of the present invention, there is provided a method of establishing a data connection between a client computer and a destination computer over a computer network containing an unknown number of secure relays, the destination computer being identified at the client computer by an address, wherein the method comprises: (a) establishing data connections between successive connection points to form a connection path from the client computer to the destination computer, (b) in the event that a connection point in the path is a secure relay, using a secure data transfer protocol to supply the address to that connection point for onward transmission; and (c) repeating step (b) for any further secure relay in the connection path until the destination computer is reached. characterised in that, in step (b), in the event that the connection point in the path is a secure relay (11, 45), and that a secure data transfer session has previously been established between the client computer (5, 7, 9) and a secure relay forming a previous point in the path, the client computer establishes a further secure data transfer session between the client computer and the subsequently located secure relay.

A 'secure relay' is defined as a relay which requires data connection requests to be transferred to it using a secure data transfer protocol. 'Firewalls' and 'proxies' are examples of relays.

The method provides a means by which a client computer can establish data communications with a remote destination computer via a network which comprises an unknown number of secure relays.

Preferably, in step (b), if the connection point in the path is a secure relay, that secure relay sends a request message to the client computer requesting a secure data transfer session between the client computer and that secure relay, and in response thereto, the client computer may establish a secure data transfer session with that secure relay. In this case, the secure relay effectively informs the client computer that it is a secure relay.

When the destination computer is reached, the destination computer may send an acknowledgement message back to the client computer, whereafter the client computer can establish a further secure data transfer session between the client computer and the destination computer. Whereas any previous secure data transfer session would probably have been set up in order to traverse one or more secure relays, this further secure data transfer session can be used to effect secure communications with the destination computer. This is particularly useful if the destination computer is, say, an E-commerce server, perhaps hosting a banking service or offering goods for sale in return for secure payment orders.

The method may further comprise determining whether a secure data transfer session has been previously been established between the client computer and the destination computer; and, in the event that such a secure data transfer session has previously been established, closing the most recently established secure data transfer session and commanding the client computer to transfer data using the previously established secure data transfer session. Reuse of previously established secure data transfer sessions is therefore provided.

The address at the client computer which identifies the destination computer may be in the form of a URL. The secure data transfer protocol is preferably the SSL protocol.

According to a second aspect of the present invention, there is provided a computer program stored on a computer usable medium, the computer program including computer readable instructions for causing a client computer to establish a data connection with a destination computer over a computer network containing an unknown number of secure relays, the destination computer being identified at the client computer by an address, the computer program causing the client computer to perform the steps of: (a) causing data connections to be established between successive connection points to form a connection path from the client computer to the destination computer, (b) in the event that a connection point in the path is a secure relay, using a secure data transfer protocol to supply the address to that connection point for onward transmission; and (c) repeating step (b) for any further secure relay in the connection path until the destination computer is reached.

The invention will now be described, by way of example, with reference to the accompanying drawings, in which:
Figure 1 is a block diagram of a computer network; and
Figure 2 illustrates the processes running on the computer network shown in Figure 1.

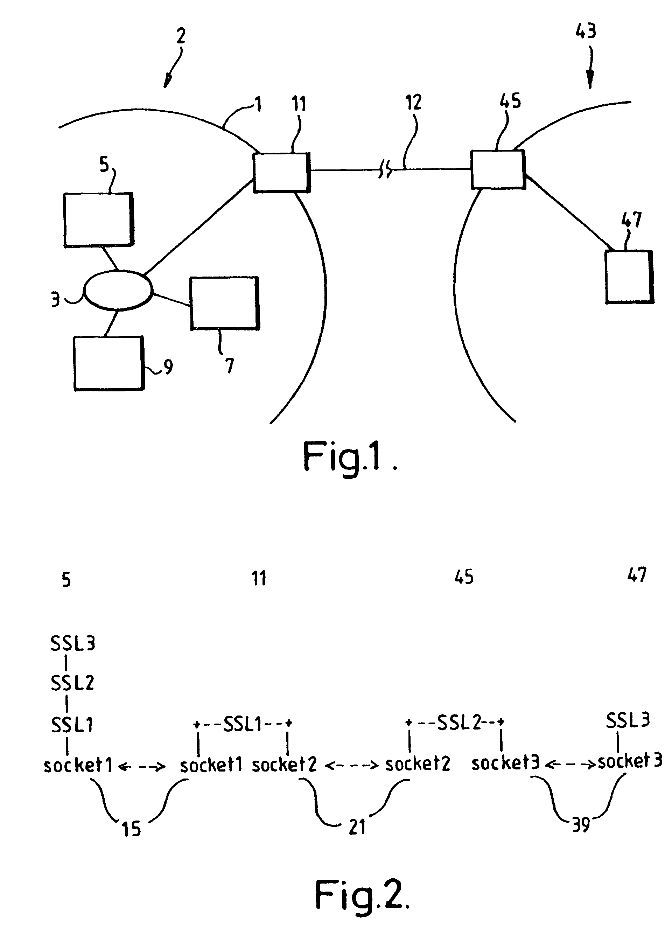

Referring to Figure 1, a first computer network 1 comprises a local area network (LAN) 3 to which is connected first, second and third client computers 5, 7, and 9. At the boundary of the first computer network 1 is provided a first firewall computer (hereinafter referred to as 'the first firewall') 11 which is connected to the LAN 3. The first firewall 11 is a secure relay computer which is configured to prevent all incoming data connections (i.e. external to the first computer network 1) being made, and to control outgoing data connections in accordance with a predefined set of criteria. For example, the predefined set of criteria may prevent data connections being made with the web-sites of competitor companies. The first firewall computer 11 is a 'secure' relay computer in that any connection request made to it (i.e. a request to connect to an external computer) can only be accepted and considered if the request is made using a secure data transfer protocol, in this case SSL.

A second computer network 43 is also shown in Figure 1. This second computer network 43 comprises a web-site server 47 and a second firewall computer (hereinafter referred to as 'the second firewall') 45 which acts in much the same way as the first firewall 11. The second firewall 45 is a secure relay and only permits incoming data connections if an SSL data connection is used.

The second computer network 43 is connected to the first computer network 1 by means of a public network, in this case the Internet. The connecting line (represented by reference numeral 12) denotes this Internet connection.

In use, a user of the LAN 3 may wish to access the web-site server 47, for example, to view a web-site and to make a transaction (e.g. to buy a product). The user will usually only be provided with the web-site address specifying the address of the web-site on the web-site server 47. This address is known as its URL. As a general point, and as will be appreciated by those skilled in the art, the route between a source and destination computer is established by means of an Internet browser decoding the URL in order to find the Internet server on which the web-site is stored. Since Internet servers are interconnected to many other servers, there may well be many different paths over which access to the required Internet server can be made. The URL will contain no information relating to firewalls or other relays which may be within the connection route between the source and destination computers.

In this embodiment, in order to be able to establish secure data connections with the first and second firewalls 11, 45 (since these are 'secure' firewalls), a special protocol is used between the first, second and third client computers 5, 7, 9 and the firewalls, as will be explained below.

Returning to the situation shown in Figure 1, if a user at the first client computer 5 enters the URL of a web-site stored on the web-site server 47 into an Internet browser running on the first client computer, that computer will then attempt to make a connection with the destination server (the web-site server). This will result in the first client computer opening a socket (socket1) with the first firewall 11 and then sending a CONNECT message to the first firewall 11 along with information pertaining to the host, the port and the URL. Had the first firewall 11 been a simple (non-secure) relay, the first firewall would simply return an OK message to the first client computer (confirming the connection) and would have proceeded to repeat the previous step, i.e. attempting to connect with the web-site server 47 (and possibly coming across further relays etc). However, since the first firewall 11 is a secure relay, the firewall returns a SECURE message to the first client computer 5. In response to this, the first client computer opens a first SSL session "SSL1" over socket1. The user at the first client computer 5 then re-sends the CONNECT message (this can be performed automatically), using the SSL1 session, to the first firewall 11 which then decides whether to allow the connection request to continue, or whether to reject the request, based on pre-stored criteria. If the request is rejected, a REJECT message is returned to the first client computer. If the request is allowed, the URL is forwarded for determining the next connection point in the path to the destination address. Since the second firewall 45 is present in Figure 1, the above process will repeat, i.e. a socket (socket2) will be established between the first firewall 11 and the second firewall 45, a CONNECT message will be relayed from the first client computer 5 to the second firewall 45 (via the SSL1 session), a SECURE message returned from the second firewall 45, a new SSL session (SSL2) invoked between the first client computer 5 and the second firewall 45, and so on. Assuming this second firewall 45 is traversed successfully, the next connection point in the path is the web-site server 47. Since the URL can be accessed from here, a simple OK acknowledgement message is returned from the web-site server to confirm to the first client computer 5 that the connection has been made. The web-site referenced by the URL can be accessed via a new SSL connection (SSL3) which is invoked on a new socket (socket3) established between the second firewall 45 and the web-site server 47.

The process by which the various SSL sessions, i.e. SSL1, SSL2 and SSL3 are set-up will be described with reference to Figure 2.

Referring to Figure 2, the layered processes running on the various system components of Figure 1 are shown. As mentioned above, initially, socket1 (indicated by reference numeral 15) is set up between the first client computer 5 and the first firewall 11, socket2 is set up between the first firewall 11 and the second firewall 45, and socket3 is set up between the second firewall 45 and the web-site server 47. As mentioned previously, a 'socket' is the standard interface by which data is transferred on the transport level of a computer network. Since SSL requires an end-to-end connection between devices in order to operate, the first SSL session (SSL1) can operate on socket1 as its transport layer. In order for SSL2 to operate between the first client computer 5 and the second firewall 45 (as is required in the above example) then SSL2 uses SSL1 as its transport layer. This is represented by the fact that SSL2 'sits' on SSL1 on the first end of the SSL2 session represented in Figure 2. In a similar manner, SSL3 uses SSL2 as its own transport layer. This use of previous SSL sessions as transport layers is made possible by using the Java Secure Sockets Extension (JSSE) implementation of SSL, since JSSE uses an abstract view of the sockets layer in networks.

SSL3 is used to effect secure data transactions between the first client computer 5 and the web-site server 47 at the destination computer, i.e. the web-site server 47. Such data transactions may involve requesting information, making a payment order to purchase goods, viewing banking information, and so on.

The above described protocol and method allows client computers to connect to destination computers without requiring any knowledge of the connection route to be taken, or of the number of secure relays along the connection route. Any number of secure relays can be traversed. It is possible that a single relay may act as a contact point for several servers. Thus, two different URLs may be referenced by the same relay, and so it may be desirable to reuse previously established sessions. The above described protocol facilitates the reuse of SSL sessions. For example, if, once a connection and SSL session (SSL3) is established between the first client computer 5 and the web-site server 47, a check is made to see if a previous SSL session has been invoked between the same client computer and web-site server, then the new SSL session (SSL3) can be dropped, and the previous SSL session used instead. This can be facilitated by sending a public key (belonging to the user at the first client computer 5) with the CONNECT message and by returning the public key with the OK message when the connection is established. Either end of the connection can determine whether a session already exists. The principles behind SSL and public/private key encryption will be well known to the person skilled in the art, an example information source being currently found at the following web-site reference:http://home.netscape.com/security/techbriefs/ssl.html.

## Claims

1. A method of establishing a data connection between a client computer (5, 7, 9) and a destination computer (47) over a computer network containing an unknown number of secure relays (11, 45), the destination computer being identified at the client computer by an address, wherein the method comprises: (a) establishing data connections between successive connection points to form a connection path from the client computer to the destination computer, (b) in the event that a connection point in the path is a secure relay, using a secure data transfer protocol to supply the address to that connection point for onward transmission; and (c) repeating step (b) for any further secure relay in the connection path until the destination computer is reached **characterised in that**, in step (b), in the event that the connection point in the path is a secure relay (11, 45), and that a secure data transfer session has previously been established between the client computer (5, 7, 9) and a secure relay forming a previous point in the path, the client computer establishes a further secure data transfer session between the client computer and the subsequently located secure relay.

2. A method according to claim 1, wherein, in step (b), in the event that the connection point in the path is a secure relay (11, 45), that secure relay sends a request message to the client computer (5, 7, 9) requesting a secure data transfer session between the client computer and that secure relay, and in response thereto, the client computer establishes a secure data transfer session with that secure relay.

3. A method according to claim 1 or claim 2, wherein the further secure data transfer session between the client computer (5, 7, 9) and the destination computer (47) is layered over the or each previous secure data transfer session.

4. A method according to claim 3, wherein the further secure data transfer session between the client computer (5, 7, 9) and the destination computer (47) uses a previous secure data transfer session as its transport layer.

5. A method according to any preceding claim, wherein, when the destination computer (47) is reached, the destination computer sends an acknowledgement message back to the client computer (5, 7, 9), whereafter the client computer establishes a further secure data transfer session between the client computer and the destination computer.

6. A method according to claim 5, wherein the method further comprises determining whether a secure data transfer session has been previously been established between the client computer (5, 7, 9) and the destination computer (47); and in the event that such a secure data transfer session has previously been established, closing the most recently established secure data transfer session and commanding the client computer to transfer data using the previously established secure data transfer session.

7. A method according to any preceding claim, wherein the address at the client computer (5, 7, 9) which identifies the destination computer (47) is in the form of a URL.

8. A method according to any preceding claim, wherein the secure data transfer protocol is the SSL protocol.

9. A computer program stored on a computer usable medium, the computer program including computer readable instructions for causing a client computer (5, 7, 9) to establish a data connection with a destination computer (47) over a computer network containing an unknown number of secure relays (11, 45), the destination computer being identified at the client computer by an address, the computer program causing the client computer to perform the steps of: (a) causing data connections to be established between successive connection points to form a connection path from the client computer to the destination computer, (b) in the event that a connection point in the path is a secure relay, using a secure data transfer protocol to supply the address to that connection point for onward transmission; and (c) repeating step (b) for any further secure relay in the connection path until the destination computer is reached **characterised in that**, in step (b), in the event that the connection point in the path is a secure relay (11, 45), and that a secure data transfer session has previously been established between the client computer (5, 7, 9) and a secure relay forming a previous point in the path, the client computer establishes a further secure data transfer session between the client computer and the subsequently located secure relay.

## Patentansprüche

1. Ein Verfahren zum Einrichten einer Datenverbindung zwischen einem Clientencomputer (5, 7, 9) und einem Zielcomputer (47) über ein Computernetz, das eine unbekannte Anzahl sicherer Relais (11, 45) aufweist, wobei der Zielcomputer an dem Clientencomputer durch eine Adresse identifiziert wird, wobei das Verfahren folgende Schritte aufweist:
(a) Einrichten von Datenverbindungen zwischen aufeinander folgenden Verbindungspunkten, um einen Verbindungspfad von dem Clientencomputer zu dem Zielcomputer zu bilden;
(b) für den Fall, dass ein Verbindungspunkt in dem Pfad ein sicheres Relais ist, Verwenden eines sicheren Datenübertragungsprotokolls, um die Adresse an diesen Verbindungspunkt zur weiteren Übertragung zu liefern; und
(c) Wiederholen des Schritts (b) für jedes weitere sichere Relais in dem Verbindungspfad, bis der Zielcomputer erreicht ist,
**dadurch gekennzeichnet, dass** bei Schritt (b) für den Fall, dass der Verbindungspunkt in dem Pfad ein sicheres Relais (11, 45) ist, und dass eine sichere Datenübertragungssitzung zuvor zwischen dem Clientencomputer (5, 7, 9) und einem sicheren Relais, das einen vorherigen Punkt in dem Pfad bildet, eingerichtet wurde, der Clientencomputer eine weitere sichere Datenübertragungssitzung zwischen dem Clientencomputer und dem nachfolgend lokalisierten sicheren Relais einrichtet.

2. Ein Verfahren gemäß Anspruch 1, bei dem bei Schritt (b) für den Fall, dass der Verbindungspunkt in dem Pfad ein sicheres Relais (11, 45) ist, dieses sichere Relais eine Anforderungsnachricht an den Clientencomputer (5, 7, 9) sendet, die eine sichere Datenübertragungssitzung zwischen dem Clientencomputer und diesem sicheren Relais anfordert, und der Clientencomputer ansprechend darauf eine sichere Datenübertragungssitzung mit diesem sicheren Relais einrichtet.

3. Ein Verfahren gemäß Anspruch 1 oder 2, bei dem die weitere sichere Datenübertragungssitzung zwischen dem Clientencomputer (5, 7, 9) und dem Zielcomputer (47) über die oder jede vorherige sichere Datenübertragungssitzung geschichtet wird.

4. Ein Verfahren gemäß Anspruch 3, bei dem die weitere sichere Datenübertragungssitzung zwischen dem Clientencomputer (5, 7, 9) und dem Zielcomputer (47) eine vorherige sichere Datenübertragungssitzung als ihre Transportschicht verwendet.

5. Ein Verfahren gemäß einem der vorhergehenden Ansprüche, bei dem, wenn der Zielcomputer (47) erreicht ist, der Zielcomputer eine Bestätigungsnachricht zurück an den Clientencomputer (5, 7, 9) sendet, wonach der Clientencomputer eine weitere sichere Datenübertragungssitzung zwischen dem Clientencomputer und dem Zielcomputer einrichtet.

6. Ein Verfahren gemäß Anspruch 5, wobei das Verfahren ferner ein Bestimmen, ob eine sichere Datenübertragungssitzung zuvor zwischen dem Clientencomputer (5, 7, 9) und dem Zielcomputer (47) eingerichtet wurde, und für den Fall, dass eine derartige sichere Datenübertragungssitzung zuvor eingerichtet wurde, ein Schließen der zuletzt eingerichteten sicheren Datenübertragungssitzung und ein Anweisen des Clientencomputers, Daten unter Verwendung der zuvor eingerichteten sicheren Datenübertragungssitzung zu übertragen, aufweist.

7. Ein Verfahren gemäß einem der vorhergehenden Ansprüche, bei dem die Adresse an dem Clientencomputer (5, 7, 9), die den Zielcomputer (47) identifiziert, in der Form eines URL vorliegt.

8. Ein Verfahren gemäß einem der vorhergehenden Ansprüche, bei dem das sichere Datenübertragungsprotokoll das SSL-Protokoll ist.

9. Ein Computerprogramm, das auf einem computerverwendbaren Medium gespeichert ist, wobei das Computerprogramm computerlesbare Instruktionen zum Bewirken, dass ein Clientencomputer (5, 7, 9) eine Datenverbindung mit einem Zielcomputer (47) über ein Computernetz einrichtet, das eine unbekannte Anzahl sicherer Relais (11, 45) enthält, umfasst, wobei der Zielcomputer an dem Clientencomputer durch eine Adresse identifiziert wird, wobei das Computerprogramm bewirkt, dass der Clientencomputer folgende Schritte durchführt:
(a) Bewirken, dass Datenverbindungen zwischen aufeinander folgenden Verbindungspunkten eingerichtet werden, um einen Verbindungspfad von dem Clientencomputer zu dem Zielcomputer zu bilden;
(b) für den Fall, dass ein Verbindungspunkt in dem Pfad ein sicheres Relais ist, Verwenden eines sicheren Datenübertragungsprotokolls, um die Adresse an diesen Verbindungspunkt zur weiteren Übertragung zu liefern; und
(c) Wiederholen des Schritts (b) für jedes weitere sichere Relais in dem Verbindungspfad, bis der Zielcomputer erreicht ist,
**dadurch gekennzeichnet, dass** bei Schritt (b) für den Fall, dass der Verbindungspunkt in dem Pfad ein sicheres Relais (11, 45) ist, und dass eine sichere Datenübertragungssitzung zuvor zwischen dem Clientencomputer (5, 7, 9) und einem sicheren Relais, das einen vorherigen Punkt in dem Pfad bildet, eingerichtet wurde, der Clientencomputer eine weitere sichere Datenübertragungssitzung zwischen dem Clientencomputer und dem nachfolgend lokalisierten sicheren Relais einrichtet.

## Revendications

1. Procédé consistant à établir une connexion de données entre un ordinateur client (5, 7, 9) et un ordinateur de destination (47) sur un réseau d'ordinateurs contenant un nombre inconnu de relais sécurisés (11, 45), l'ordinateur de destination étant identifié à l'ordinateur client par une adresse, dans lequel le procédé comprend les étapes consistant à : (a) établir les connexions de données entre des points de connexion successifs pour former un chemin de connexion allant de l'ordinateur client jusqu'à l'ordinateur de destination ; (b) dans le cas où le point de connexion sur le chemin est un relais sécurisé, utiliser un protocole de transfert de données sécurisé pour fournir l'adresse à ce point de connexion pour poursuivre la transmission ; et (c) répéter l'étape (b) pour n'importe quel autre relais sécurisé sur le chemin de connexion jusqu'à ce que l'ordinateur de destination soit atteint, **caractérisé en ce que**, à l'étape (b), dans le cas où le point de connexion sur le chemin est un relais sécurisé (11, 45) et qu'une session de transfert de données sécurisée a auparavant été établie entre l'ordinateur client (5, 7, 9) et un relais sécurisé formant un précédent point sur le chemin, l'ordinateur client établit une session de transfert de données sécurisée supplémentaire entre l'ordinateur client et le relais sécurisé situé par la suite.

2. Procédé selon la revendication 1, dans lequel, à l'étape (b), dans le cas où le point de connexion sur le chemin est un relais sécurisé (11, 45), ce relais sécurisé envoie un message de demande à l'ordinateur client (5, 7, 9) demandant une session de transfert de données sécurisée entre l'ordinateur client et ce relais sécurisé et, en réponse à celui-là, l'ordinateur client établit une session de transfert de données sécurisée avec ce relais sécurisé.

3. Procédé selon la revendication 1 ou la revendication 2, dans lequel la session de transfert de données sécurisée supplémentaire entre l'ordinateur client (5, 7, 9) et l'ordinateur de destination (47) est disposée en couches sur la ou sur chaque précédente session de transfert de données sécurisée.

4. Procédé selon la revendication 3, dans lequel la session de transfert de données sécurisée supplémentaire entre l'ordinateur client (5, 7, 9) et l'ordinateur de destination (47) utilise une précédente session de transfert de données sécurisée comme étant sa couche de transport.

5. Procédé selon n'importe quelle revendication précédente, dans lequel, lorsque l'ordinateur de destination (47) est atteint, l'ordinateur de destination renvoie un message d'accusé de réception à l'ordinateur client (5, 7, 9), après quoi l'ordinateur client établit une session de transfert de données sécurisée supplémentaire entre l'ordinateur client et l'ordinateur de destination.

6. Procédé selon la revendication 5, dans lequel le procédé comprend, en outre, les étapes consistant à déterminer si une session de transfert de données sécurisée a auparavant été établie entre l'ordinateur client (5, 7, 9) et l'ordinateur de destination (47) ; et, dans le cas où une telle session de transfert de données sécurisée a auparavant été établie, fermer la session de transfert de données sécurisée établie le plus récemment et commander à l'ordinateur client de transférer les données en utilisant la session de transfert de données sécurisée établie précédemment.

7. Procédé selon n'importe quelle revendication précédente, dans lequel l'adresse à l'ordinateur client (5, 7, 9), qui identifie l'ordinateur de destination (47), est sous la forme d'une URL (adresse électronique).

8. Procédé selon n'importe quelle revendication précédente, dans lequel le protocole de transfert de données sécurisé est le protocole SSL.

9. Programme d'ordinateur stocké sur un support utilisable d'ordinateur, le programme d'ordinateur incluant des instructions lisibles d'ordinateur pour faire qu'un ordinateur client (5, 7, 9) établisse une connexion de données avec un ordinateur de destination (47) sur un réseau d'ordinateurs contenant un nombre inconnu de relais sécurisés (11, 45), l'ordinateur de destination étant identifié à l'ordinateur client par une adresse, le programme d'ordinateur faisant que l'ordinateur client exécute les étapes consistant à : (a) faire que les connexions de données soient établies entre des points de connexion successifs pour former un chemin de connexion allant de l'ordinateur client jusqu'à l'ordinateur de destination ; (b) dans le cas où un point de connexion sur le chemin est un relais sécurisé, utiliser un protocole de transfert de données sécurisé pour fournir l'adresse à ce point de connexion pour poursuivre la transmission ; et (c) répéter l'étape (b) pour n'importe quel autre relais sécurisé sur le chemin de connexion jusqu'à ce que l'ordinateur de destination soit atteint, **caractérisé en ce que**, à l'étape (b), dans le cas où le point de connexion sur le chemin est un relais sécurisé (11, 45) et qu'une session de transfert de données sécurisée a auparavant été établie entre l'ordinateur client (5, 7, 9) et un relais sécurisé formant un précédent point sur le chemin, l'ordinateur client établit une session de transfert de données sécurisée supplémentaire entre l'ordinateur client et le relais sécurisé situé par la suite.
